# EUROPÄISCHE PATENTANMELDUNG

(11) **EP 4 039 385 A1**
(43) Veröffentlichungstag der Anmeldung: **10.08.2022**
(21) Anmeldenummer: 22152005.9
(22) Anmeldetag: 18.01.2022
(51) Int. Cl.: B21D 22/22

(54) **VERFAHREN UND FORMVORRICHTUNG ZUR UMFORMUNG EINER METALLVERBUNDFOLIE FÜR BATTERIEZELLEN**

(30) Priorität: 03.02.2021 DE 102021102525
(71) Anmelder: VOLKSWAGEN AG, 38440 Wolfsburg (DE)
(72) Erfinder: Jamadar, Kartik, 38442 Wolfsburg (DE); Theuerkauf, Christian, 38114 Braunschweig (DE); Schröder, Christian, 38118 Braunschweig (DE)
(74) Vertreter: karo IP

(57) **Zusammenfassung**

Die vorliegende Erfindung betrifft ein Verfahren zur Umformung einer Metallverbundfolie (7) für Batteriezellen (33), das wenigsten die folgenden Schritte aufweist:
a) Einlegen der Metallverbundfolie (7) in eine Formvorrichtung (1) mit mehreren Blechhaltern (2,11) und mehreren Matrizen (3,10) sowie einen Stempel (4);
b) Fixieren eines ersten Fixierbereichs (13) der Metallverbundfolie (7) durch Schließen eines ersten Blechhalters (3) und einer ersten Matrize (3);
c) Fixieren eines zweiten Fixierbereichs (14) der Metallverbundfolie (7) durch Schließen eines zweiten Blechhalters (11) und einer zweiten Matrize (10);
d) zumindest teilweises Verformen des zweiten Fixierbereichs (14) in eine erste Richtung (16) durch Verfahren des zweiten Blechhalters (11) und der zweiten Matrize(10);
e) zumindest teilweises Verformen eines Umformbereichs (15) in eine zweite Richtung (19) durch Verfahren des Stempels (4).

Zudem wird eine Formvorrichtung (1) zur Umformung einer Metallverbundfolie (7) für Batteriezellen vorgeschlagen.

## Beschreibung

Die vorliegende Erfindung betrifft ein Verfahren zur Umformung einer Metallverbundfolie für Batteriezellen sowie die nach diesem Verfahren hergestellten Batteriezellen. Ferner betrifft die Erfindung eine Formvorrichtung zur Umformung einer Metallverbundfolie für Batteriezellen.

Für die Herstellung von Batteriezellen ist es erforderlich, Metallverbundfolien einer Formgebung zu unterziehen, sodass diese Aufnahmebereiche für Zellstapel mit hohen elektrischen Speicherdichten ausbilden können. Im Stand der Technik sind hierzu beispielsweise sogenannte Pouchfolien bekannt, die aus einem Verbund aus Aluminium und Kunststoff durch Umformung hergestellt werden. Dabei ist wenigstens eine Aluminiumschicht mit weiteren flexiblen Kunststoffschichten zu einer Pouchfolie verbunden. Derartige Aluminium-Laminatfolien weisen jedoch teilweise recht schlechte Tiefzieheigenschaften auf, sodass es bei der Umformung der Metallverbundfolien immer wieder zur Bildung von Rissen und Falten kommt. Insbesondere sind nach Umformvorgängen immer wieder sehr starke Rückfederungen zu beobachten. Dies ist kritisch, weil die aus Elektroden und Separatoren gebildeten Batteriezellen dauerhaft sicher ummantelt sein müssen, jedoch in den hoch beanspruchten, d. h. stark verformten Bereichen, immer wieder Beschädigungen der ummantelnden Pouchfolien auftreten können.

Zudem erfordern moderne hochkapazitative Batteriezellen, dass eine größtmögliche Anzahl an Elektroden im jeweiligen Zellstapel der Batteriezelle vorzusehen ist, die dann zusammen von der Metallverbundfolie ummantelt werden. Hierzu muss die Metallverbundfolie möglichst tief umgeformt werden. Je tiefer aber diese Umformung der Metallverbundfolie ausfällt, desto größer ist die Materialausdünnung in den kritischen Bereichen, wodurch Schäden entstehen.

Verwendet man zur Umformung der Metallverbundfolie ein übliches Umformwerkzeug, so treten die Materialausdünnungen insbesondere in den Stempelradien und an Stegen auf, die in dem Werkzeug vorgesehen sind. Derartige kritische Bereiche führen häufig dazu, dass sich in diesen Bereichen der Ummantelung Risse in den Metallverbundfolien ausbilden und dadurch die Betriebssicherheit der Batteriezellen gefährden.

So sind im Stand der Technik unterschiedliche Methoden bekannt, um die Umformung von Metallverbundfolien darzustellen. Eine Methode besteht darin, dass die Folien mittels eines Stempels tiefgezogen werden. Der Stempel verformt dabei die Metallverbundfolie in Richtung einer Matrize, wobei die gewünschte endgültige Form der Metallverbundfolie als Negativform in dieser Matrize ausgebildet ist.

Zur Vermeidung von Rückfederungen nach der Umformung sind bislang drei Maßnahmen bekannt. Die erste besteht darin zwei geformte Metallverbundfolien unmittelbar nach dem Umformen durch Wärmeeintrag miteinander zu verbinden. Dies wird in der Regel durch Verschmelzen erreicht.

Eine weitere Maßnahme besteht darin, die Metallverbundfolie während des Umformens auf Temperaturen von beispielsweise 80°C zu erwärmen, um durch diesen Wärmeeintrag die Rückfederung nach dem Umformen zu reduzieren. Dies ist jedoch sehr kosten- und energieintensiv und verlangsamt den Fertigungsprozess aufgrund der für den Wärmeintrag benötigten Zeitdauer.

Als dritte Maßnahme kann der Aluminiumanteil der Metallverbundfolie erhöht werden, was durch die Verwendung von relativ dickwandigen Aluminiumfolien mit beispielsweise mehr als 80 [Micron bzw. µm] erreicht wird. Dies erfordert jedoch die Verwendung von größeren Mengen des relativ teuren Aluminiums, wodurch die Materialkosten, das Volumen und auch das Gewicht der Metallverbundfolien ansteigen.

Alle bislang bekannten Lösungen haben somit unterschiedliche Nachteile, indem sie die Fertigungskosten erhöhen, die Fertigungszeiten verlängern oder die Metallverbundfolien unnötig größer und schwerer machen.

Aufgabe der vorliegenden Erfindung ist es daher, die sich aus dem Stand der Technik ergebenden Probleme zumindest teilweise zu lösen. Insbesondere soll ein Verfahren zur Verarbeitung einer Metallverbundfolie angegeben werden, mit der eine präzise Umformung der Metallverbundfolie ohne Rückfederung möglich wird. Gleichzeitig sollen dabei die Prozesskosten und die Bearbeitungszeiten möglich reduziert werden. Ferner soll sichergestellt werden, dass es nicht zu Rissbildungen, Faltenbildungen oder sonstigen Beschädigungen der Metallverbundfolie einer fertigen Batteriezelle kommt.

Zur Lösung dieser Aufgaben tragen ein Verfahren und eine Formvorrichtung mit den Merkmalen gemäß den unabhängigen Patentansprüchen bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Vorliegend wird ein Verfahren zur Herstellung einer Metallverbundfolie für Batteriezellen vorgeschlagen, das wenigstens die folgenden Schritte aufweist:
a) Einlegen der Metallverbundfolie in eine Formvorrichtung mit mehreren Blechhaltern und mehreren Matrizen, sowie mit einem ersten Stempel;
b) Fixieren eines ersten Fixierbereichs der Metallverbundfolie durch Schließen eines ersten Blechhalters und einer ersten Matrize;
c) Fixieren eines zweiten Fixierbereichs der Metallverbundfolie durch Schließen eines zweiten Blechhalters und einer zweiten Matrize;
d) zumindest teilweises Verformen des zweiten Fixierbereichs in eine erste Richtung durch Verfahren des zweiten Blechhalters und der zweiten Matrize;
e) zumindest teilweises Verformen eines Umformbereichs in eine zweite Richtung durch Verfahren des ersten Stempels.

Es ist bevorzugt, dass diese Schritte in der hier vorgeschriebenen Reihenfolge a), b), c), d) und e) durchgeführt werden, wobei nicht erforderlich ist, dass diese unmittelbar aneinander (direkt) anschließen.

Im Schritt a) wird zunächst eine Metallverbundfolie in die Formvorrichtung eingelegt. Die Formvorrichtung weist dazu mehrere Blechhalter und mehrere Matrizen sowie einen ersten Stempel auf.

Im Schritt b) wird ein erster Fixierbereich der Metallverbundfolie durch das Zusammenfahren eines ersten Blechhalters und einer ersten Matrize innerhalb der Formvorrichtung fixiert. Das Zusammenfahren bewirkt ein Schließen der Formvorrichtung, insbesondere des ersten Blechhalter und der gegenüberliegenden ersten Matrize. Der erste Fixierbereich ist dabei der Bereich der Metallverbundfolie, der mit dem ersten Blechhalter und der ersten Matrize in direktem Kontakt steht und von diesen durch Klemmung (insbesondere kraftschlüssig) fixiert wird. Diese Fixierung ist erforderlich, weil die Metallverbundfolie ansonsten während des Tiefziehvorgangs nicht sicher innerhalb der Formvorrichtung gehalten würde.

Der Schritt c) sieht vor, dass ein zweiter Fixierbereichs der Metallverbundfolie durch Schließen eines zweiten Blechhalters und einer zweiten Matrize fixiert wird. Auch dies geschieht wieder durch ein (entsprechendes) Zusammenfahren des zweiten Blechhalters und der zweiten Matrize. Hierbei ist der zweite Fixierbereich vorzugsweise innerhalb des ersten Fixierbereichs angeordnet.

Im Schritt d) wird dann ein zumindest teilweises Verformen des zweiten Fixierbereichs in eine erste Richtung durch Verfahren des zweiten Blechhalters und der zweiten Matrize ausgeführt. Vorzugsweise werden der zweite Blechhalter und die zweite Matrize dazu gemeinsam bzw. zeitgleich verfahren, so dass die zwischen diesen beiden Abschnitten erzeugte Fixierung des zweiten Fixierbereichs während des Umformvorgangs beibehalten wird. Insbesondere ist die erste Richtung dabei so gewählt, dass die beiden Abschnitte in Richtung der ersten Matrize verfahren werden, wobei die so verfahrene zweite Matrize bezüglich der ersten Matrize wie ein zweiter Stempel wirkt. Hierbei kann die Metallverbundfolie in dem Bereich zwischen der ersten Matrize und der als zweiter Stempel wirkenden zweiten Matrize durch Streckung verformt werden. Wenn dies erforderlich wird, kann dabei gleichzeitig der zweite Fixierbereich oder ein Teilbereich davon umgeformt werden. Während die Metallverbundfolie bei dieser Umformung im Bereich zwischen dem ersten und zweiten Fixierbereich eine Streckung erfährt, erfolgt im zweiten Fixierbereich aufgrund der dortigen Klemmung keine Streckung der Metallverbundfolie.

Im Schritt e) erfolgt dann ein zumindest teilweises Verformen eines Umformbereichs durch Verfahren des ersten Stempels in eine zweite Richtung. Dabei ist der Umformbereich vorzugsweise innerhalb des zweiten Fixierbereichs angeordnet und die Verformung des Umformbereichs ist so gewählt, dass die Metallverbundfolie nach der Entnahme aus der Umformvorrichtung und nach erfolgter Rückfederung die gewünschte Form aufweist. Hierzu ist es vorteilhaft, wenn die zweite Richtung zumindest annähernd so gewählt ist, dass sie zu der ersten Richtung entgegengesetzt ausgerichtet ist. Hierbei kann jedoch durchaus eine große Toleranz in den Winkelabweichungen von beispielsweise plus oder minus 20° bis 30° auftreten, ohne dass dies der Erfindung abträglich wäre.

Insbesondere kann bei Anwendungsfällen, bei denen eine Fixierung des zweiten Fixierbereichs während der Umformung durch die zweite Matrize aus umformtechnischen Gründen noch nicht gewünscht ist, vorgesehen werden, dass der Schritt c) zeitlich nach Schritt d) durchgeführt wird.

Insbesondere kann das Verfahren auch bei Raumtemperatur durchgeführt werden. Dies ermöglicht es auf eine Heizung zu verzichten und hierdurch einerseits die Kosten für die benötigte Heizenergie einzusparen und andererseits Umformung mit recht kurzen Zykluszeiten durchzuführen. Diese Zykluszeiten können allein schon deshalb sehr viel kürzer gehalten werden, da die Zeit zum Aufheizen der Metallverbundfolie nicht aufgewendet werden muss.

Insbesondere kann auch vorgesehen werden, dass die Metallverbundfolie im zweiten Fixierbereich an einer Stirnfläche des zweiten Blechhalters zumindest teilweise unter einem Winkel zu einer Pressebene umgeformt wird. Die Stirnfläche des zweiten Blechhalters ist dabei die Fläche, die in Richtung der Zusammenfahrbewegung weist und mit der Metallverbundfolie in Kontakt steht, um diese durch Klemmen zu fixieren. Weiterhin ist die Pressebene eine Ebene, die normal zur zweiten Richtung ausgerichtet ist. Weist eine zu verarbeitende Metallverbundfolie eine sehr starke Rückfederung auf, so kann vorgesehen werden, dass nicht nur eine Verformung im Umformbereich vorgesehen wird, um die zu erwartende Rückfederung zu kompensieren, sondern zusätzlich auch noch der zweite Fixierbereich unter einem Winkel von beispielsweise 0°-20° bezogen auf die Pressebene umgeformt wird. Durch die Kombination der Umformung sowohl im zweiten Fixierbereich als auch im Umformbereich können auch Metallverbundfolien mit stärkeren Rückfederungseigenschaften präzise und maßhaltig verarbeitet werden.

Insbesondere kann dabei vorgesehen werden, dass mit dem zweiten Blechhalter im zweiten Fixierbereich eine Haltekraft erzeugt wird, die größer ist als eine mit dem Stempel im Umformbereich erzeugte Zugkraft. Hierdurch wird sichergestellt, dass die Metallverbundfolie sicher im zweiten Fixierbereich gehalten wird und nicht etwa durch die vom Stempel erzeugten Zugkräfte in unkontrollierter Weise bewegt wird.

Ferner ist es vorteilhaft, wenn in der Formvorrichtung zumindest während des Umformens wenigstens der in Verformungsrichtung jeweils hinter der Metallverbundfolie liegenden Bereich der Matrize entlüftet wird. Hierdurch können kürzere Zykluszeiten für den Umformungsvorgang realisiert werden, ohne auf eine andernfalls erforderliche Entlüftung der Form warten zu müssen.

Insbesondere haben sich als Metallverbundfolie sogenannte Aluminium-Verbundfolien bewährt, die als Pouchfolien sehr gut eingesetzt werden können. Derartige Aluminium-Verbundfolien sind bereits heute im Markt verfügbar und weisen grundsätzlich gute Eigenschaften hinsichtlich der Dauerfestigkeit und der Aufnahme von Batteriezellen auf.

Dies setzt aber voraus, dass während des Tiefziehprozesses Beschädigungen der Verbundfolie vermieden werden, wie dies mittels der vorliegenden Erfindung möglich ist.

Insbesondere können dazu Metallverbundfolien verwendet werden, deren Folienstärke zwischen 120 µm [Mikrometer] und 180 µm beträgt. Derartige Folien weisen die erforderliche Festigkeit auf und sind gleichzeitig noch gut mittels des vorgeschlagenen Tiefziehprozesses umformbar. Während die Erfindung grundsätzlich mit unterschiedlichsten Folienstärken umsetzbar ist, besteht ein besonderer Vorteil des Verfahrens darin, dass auch Metallverbundfolien mit dünnen Aluminiumschichten von weniger als 60 µm [Mikrometer] bzw. weniger als 40 µm bei gleichzeitig eliminierter oder nur minimalst auftretender Rückfederung umgeformt werden können. Hierdurch kann relativ teures Aluminium beim Herstellungsprozess eingespart werden.

Ganz besonders vorteilhaft können folglich Batteriezellen mit einer Metallverbundfolie hergestellt werden, die nach dem zuvor beschriebenen Verfahren formgebend bearbeitet worden sind. Der Vorteil der vorliegenden Erfindung besteht darin, dass die so geformten Metallverbundfolien aufgrund der vermiedenen Rückfederung sehr formgenau und frei von Beschädigungen, wie beispielsweise Materialausdünnungen oder Rissen sind. Die so hergestellten Metallverbundfolien gewährleisten eine sichere und dauerhafte Ummantelung der Batteriezellen und vermeiden die Ausbildung von unerwünschten Falten beim Befüllen mit Elektrolyten unter Vakuum.

Insbesondere profitiert im Weiteren ein Kraftfahrzeug von der vorliegenden Erfindung, wenn dieses mit wenigstens einer Batteriezelle ausgestattet ist, die von einer Metallverbundfolie umschlossen ist, welche zuvor gemäß dem vorgeschlagenen Verfahren formgebend bearbeitet worden ist. Eine derartige Batteriezelle ist günstiger in der Fertigung und aufgrund der verbesserten Metallverbundfolien zuverlässiger im Dauerbetrieb. Außerdem kann mit einer derartigen Metallverbundfolie eine höhere Energiedichte in einer Batteriezelle erreicht werden, weil die Folien ein geringeres Gewicht und bessere Kühleigenschaften aufweisen.

Eine andere besonders bevorzugte Ausführungsform der vorliegenden Erfindung zur Lösung der Aufgabenstellung sieht eine Formvorrichtung zur Umformung einer Metallverbundfolie für Batteriezellen vor. Die so gestaltete Formvorrichtung weist zumindest einen ersten Blechhalter, eine erste Antriebsvorrichtung zum Zusammenfahren des ersten Blechhalters mit einer ersten Matrize, einen zweiten Blechhalter, eine zweite Matrize und einen ersten Stempel auf. Hierbei sind der zweite Blechhalter, die zweite Matrize und der erste Stempel so innerhalb des ersten Blechhalters und innerhalb der ersten Matrize angeordnet, dass die zweite Matrize als zweiter in die erste Matrize verfahrbarer Stempel ausgebildet ist und der erste Stempel so innerhalb des zweiten Blechhalters angeordnet ist, dass dieser in die zweite Matrize verfahrbar ist. Die so gestaltete Formvorrichtung kann die Metallverbundfolie gleichzeitig an einem ersten Fixierbereich und einem zweiten Fixierbereich fixieren und zwischen diesen beiden Fixierbereichen eine Umformung vornehmen, indem die zweite Matrize zusammen mit dem zweiten Blechhalter als zweiter Stempel in die erste Matrize hineinverfahren wird. Zusätzlich ist noch ein erster Stempel vorgesehen, der eine zusätzliche Verformung in dem Umformbereich vornimmt, um die auftretende Rückfederung der Metallverbundfolie zu kompensieren, sodass am Ende des Umformungsvorgangs eine besonders maßgenaue Metallverbundfolie gefertigt werden kann.

Für einen sicheren Halt der Metallverbundfolie während des Umformungsvorgangs ist es zudem vorteilhaft, wenn diese eine zweite Antriebsvorrichtung zum Zusammenfahren des zweite Blechhalters mit der zweiten Matrize und eine dritte Antriebsvorrichtung zum Zusammenfahren des ersten Stempels mit der zweiten Matrize aufweist. Hierbei kann die zweite Antriebsvorrichtung eine Haltekraft auf die Metallverbundfolie ausüben die größer ist als eine Zugkraft, welche die dritte Antriebsvorrichtung über den ersten Stempel auf die Metallverbundfolie ausüben kann. Ziel ist es den durch den ersten Stempel erzeugten und parallel zur Pressebene auf die Metallverbundfolie wirkenden Zugkräften entgegen zu wirken, um zu verhindern, dass die Metallverbundfolie im zweiten Fixierbereich eine Lageänderung erfährt.

Insbesondere kann auch vorgesehen werden, dass der erste Stempel die Metallverbundfolie in einer Gegenrichtung zur Umformrichtung des zweiten Stempels umformt.

Weiterhin kann je nach Bedarf vorgesehen werden, dass der erste Stempel eine konvexe Stempelfläche aufweist. Die Stempelfläche ist dabei die Fläche, die mit der Metallverbundfolie in Kontakt gelangt. Durch die konvexe Formgebung der Stempelfläche kann die Metallverbundfolie in eine Form gebracht werden, die annähernd einer Wölbung entspricht. Durch die nach der Entnahme der Metallverbundfolie auftretende Rückfederung kann dann bei entsprechend gewählter Wölbung der konvexen Stempelfläche erreicht werden, dass die Wölbung die Rückfederung weitestgehend kompensiert und auf diese Weise eine annähernd ebene Fläche entsteht.

Insbesondere kann auch vorgesehen werden, dass ein Vorlauf des zweiten Blechhalters gegenüber dem ersten Stempel von wenigstens 0,5 mm [Millimeter], vorzugsweise von wenigstens 1 mm beträgt. Ein solcher Vorlauf stellt sicher, dass beim Zusammenfahren der Abschnitte zunächst der zweite Blechhalter die zweite Matrize kontaktiert, bevor der erste Stempel die Metallverbundfolie kontaktiert. Auf diese Weise ist sichergestellt, dass der zweite Fixierbereich zwischen dem zweiten Blechhalter unter der zweiten Matrize zuerst sicher fixiert ist, bevor der erste Stempel die Metallverbundfolie kontaktiert und diese unter Ausübung von Zugkräften umformt.

Insbesondere vorteilhaft ist es auch, wenn parallel zur Bewegungsrichtung der Relativbewegung zwischen dem zweiten Blechhalter und der ersten Matrize ein Spalt zwischen der zweiten Matrize und der ersten Matrize vorgesehen ist und der Spalt mit einer variablen Spaltbreite ausgeführt ist. Grundsätzlich kommen hierfür eine Spaltbreite in Betracht, die zwischen 100% und 150% der Materialstärke der Metallverbundfolie beträgt. Die Verbindung von variablen Spaltbreiten ermöglicht es die Formvorrichtung optimal an die jeweilige Metallverbundfolie anzupassen. In der Praxis sind insbesondere in den Eckbereichen unerwünscht hohe Streckungen der Metallverbundfolie zu beobachten, während in den dazwischenliegenden Bereichen teilweise nur sehr geringe Umformung und damit auch relativ geringe Streckungen auftreten. Mittels der variablen Spaltbreiten können nun die bei der Umformung erzeugten Streckungen an den Ecken der Metallverbundfolie durch größere Spaltbreiten reduziert und in den dazwischenliegenden Bereichen durch Spaltbreiten erhöht werden, die im Vergleich zu den Spaltbreiten an den Ecken kleiner sind. Dies geschieht beispielsweise, indem die Spaltbreite in den Eckbereichen so gewählt wird, dass sie größer ist als die Materialstärke der Metallverbundfolie. Ein geeigneter Wertebereich für die Spaltbreite im Bereich der Ecken ist beispielsweise eine Spaltbreite, die zwischen 100 % und 150 % und insbesondere zwischen 110 % und 150% der Materialstärke der Metallverbundfolie beträgt. In den anderen Bereichen hingegen, in denen eine größere Streckung gewünscht wird, kann ein Spaltbreite verwendet werden, die wenigstens so groß st wie die Materialstärke der Metallverbundfolie. So kann in diesen Bereichen zwischen den Ecken beispielsweise eine Spaltbreite verwendet werden, die zwischen 100 % und 120 % und insbesondere zwischen 100 % und 110 % der Materialstärke der Metallverbundfolie beträgt.

Insbesondere können die reduzierten oder vergrößerten Spaltbreiten auch einzeln oder gleichzeitig verwendet werden, so dass die Spaltbreite in wenigstens einem Abschnitt gleich oder größer als eine Materialstärke der Metallverbundfolie ist.

Insbesondere vorteilhaft ist es auch, wenn wenigstens 60%, vorzugsweise wenigstens 80% und insbesondere wenigstens 90% einer Seitenlänge der zweiten Matrize eine Spaltbreite zwischen 100% und 120% einer Materialstärke der Metallverbundfolie aufweist. Diese Seitenlänge, die beispielsweise zwischen zwei Ecken liegt und eine solche Spaltbreite aufweist, kann so mit einer höheren Streckung der Metallverbundfolie umgeformt werden als anderen Bereiche mit größeren Spaltbreiten.

Weiterhin ist es vorteilhaft, dass eine Stempelfläche des zweiten Blechhalters wenigstens teilweise unter einem Winkel zu einer Pressebene ausgeführt ist. Hierdurch kann der zweite Fixierbereich unter einem Winkel zu dieser Pressebene so vorgeformt werden, dass auch dieser nach erfolgter Rückfederung der Metallverbundfolie die gewünschte Form aufweist und die Rückfederung insgesamt möglichst vollständig kompensiert.

Ferner kann vorgesehen werden, dass die Metallverbundfolie wenigstens eine Schicht PET, Aluminium, Nylon oder PP umfasst. Derartige Aluminium-Verbundfolien sind bereits heute im Markt verfügbar und weisen grundsätzlich gute Eigenschaften hinsichtlich der Dauerfestigkeit und der Aufnahme von Batteriezellen auf. Dies setzt aber voraus, dass während des Tiefziehprozesses Beschädigungen der Verbundfolie und Formungenauigkeiten durch Rückfederungen vermieden werden, wie dies mittels der vorliegenden Erfindung möglich ist.

Insbesondere vorteilhaft ist es schließlich, dass die Metallverbundfolie eine Schichtdicke des Aluminiums von weniger als 60 µm [Mikrometer], vorzugsweise von weniger als 40 µm aufweist. Im Zusammenhang mit der vorliegenden Erfindung können insbesondere Metallverbundfolien verarbeitet werden, die besonders dünne Aluminiumschichten von beispielsweise 40 µm und darunter aufweisen. Hierdurch kann der Einsatz des teuren Aluminiums reduziert und die Schichtdicke der Metallverbundfolie verringert werden.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
Fig.1: eine schematische Schnittansicht einer geöffneten Formvorrichtung für Metallverbundfolien nach dem Stand der Technik;
Fig. 2: eine schematische Schnittansicht einer geschlossenen Formvorrichtung für Metallverbundfolien nach dem Stand der Technik;
Fig. 3: eine schematische Schnittansicht einer nach der Umformung geöffneten Formvorrichtung für Metallverbundfolien nach dem Stand der Technik;
Fig. 4: eine schematisch Schnittansicht einer erfindungsgemäßen Formvorrichtung im geöffneten Zustand;
Fig. 5: eine schematisch Schnittansicht einer erfindungsgemäßen Formvorrichtung mit zusammengefahrenem ersten Blechhalter;
Fig. 6: eine schematisch Schnittansicht einer erfindungsgemäßen Formvorrichtung mit zusammengefahrenem zweiten Blechhalter;
Fig. 7: eine schematisch Schnittansicht einer erfindungsgemäßen Formvorrichtung mit zusammengefahrenem zweitem Stempel;
Fig. 8: eine schematisch Schnittansicht einer erfindungsgemäßen Formvorrichtung mit zusammengefahrenem zweitem Stempel mit gerader und gewinkelter Matrize;
Fig. 9: Darstellung der Rückfederung bei einer gewinkelten Matrize;
Fig. 10: Darstellung der Rückfederung bei einer geraden Matrize;
Fig. 11: eine schematisch Schnittansicht einer erfindungsgemäßen Formvorrichtung im geschlossenen Zustand mit zusammengefahrenem erstem Stempel;
Fig. 12: eine schematisch Schnittansicht einer erfindungsgemäßen Formvorrichtung im geöffneten Zustand nach der Umformung;
Fig. 13: eine Schnittansicht eines zweiten Blechhalters mit einem ersten Stempel;
Fig. 14: eine Schrägansicht eines ersten Stempels mit konvexer Stempelfläche;
Fig. 15: eine Schrägansicht eines ersten Stempels mit einer gefasten geraden Stempelfläche;
Fig. 16: eine Draufsicht auf einen zweiten Blechhalter;
Fig. 17: eine Schrägansicht eines Gegenstempels nach dem Stand der Technik;
Fig. 18: eine erste Ausführungsform eines ersten Stempels;
Fig. 19: eine zweite Ausführungsform eines ersten Stempels;
Fig. 20: eine erste Ausführungsform eines ersten Stempels;
Fig. 21: eine Draufsicht auf einen zweiten Stempel in einer ersten Matrize; und
Fig. 22: eine schematische Darstellung eines Kraftfahrzeugs mit einer Batteriezelle.

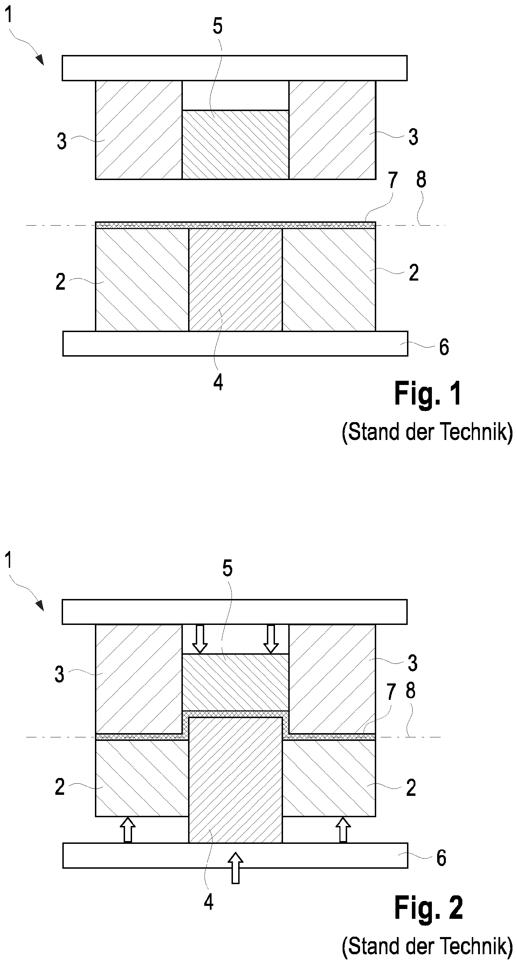

In Fig. 1 ist eine Formvorrichtung 1 gemäß dem Stand der Technik in einer seitlichen Schnittansicht dargestellt. Die Formvorrichtung 1 besteht aus einem ersten Blechhalter 2, einer ersten Matrize 3, einem ersten Stempel 4 sowie einem Gegenstempel 5. Weiterhin weist die Formvorrichtung 1 eine erste Antriebsvorrichtung 6 auf, die dazu geeignet ist, den ersten Blechhalter 2 mit der ersten Matrize 3 zusammenzufahren und dabei eine Metallverbundfolie 7, die in einer Pressebene 8 angeordnet ist, zu fixieren.

In Fig. 2 ist die Formvorrichtung 1 nach Fig. 1 in einem Zustand dargestellt, in dem die Metallverbundfolie 7 umgeformt wurde, indem der Stempel 4 zusammen mit dem Gegenstempel 5 in der Bildebene nach oben in die erste Matrize 3 hinein verfahren wurde.

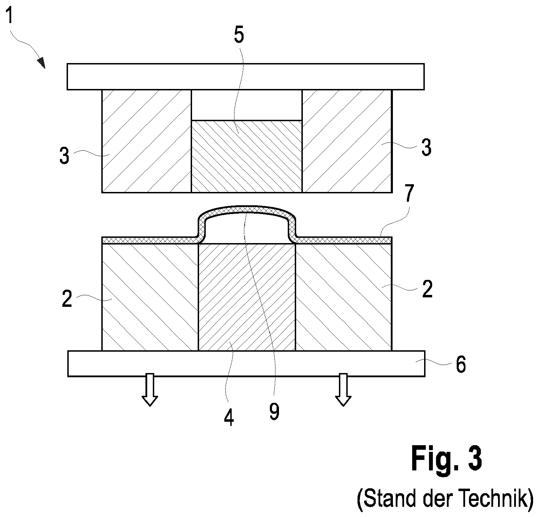

Die Fig. 3 zeigt die Situation nach dem Umformvorgang bei geöffneter Formvorrichtung 1, das bedeutet alle Abschnitte, d. h. der Blechhalter 2, die Matrize 3, der Stempel 4 und der Gegenstempel 5 sind in ihre Ausgangspositionen zurück verfahren. Hierbei zeigt sich, dass die Metallverbundfolie 7 in dem vom Stempel 4 umgeformten Bereich eine unerwünschte Rückfederung 9 aufweist.

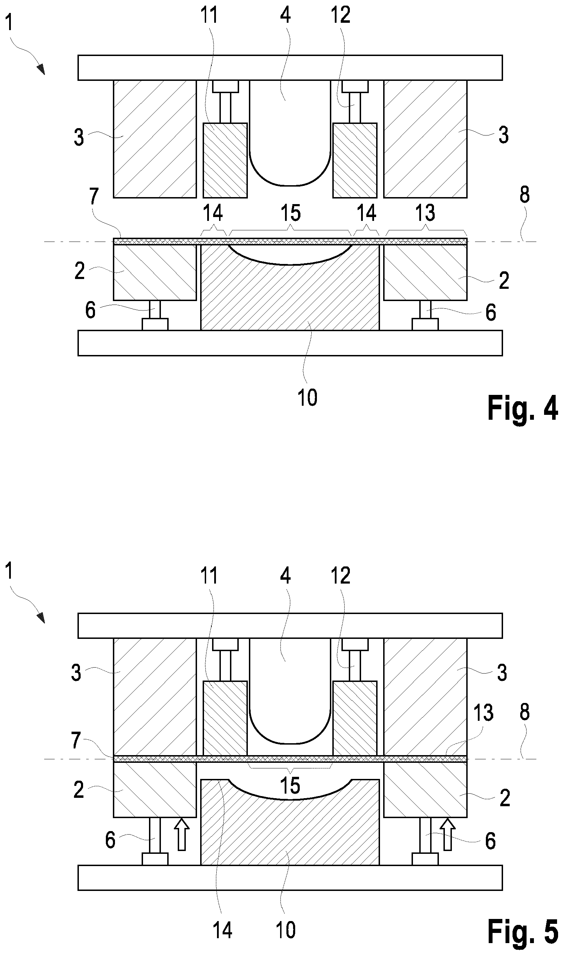

In Fig. 4 ist eine Formvorrichtung 1 in einer schematischen Schnittdarstellung gezeigt. Diese Formvorrichtung 1 weist einen ersten Blechhalter 2, eine erste Matrize 3, eine zweite Matrize 10, eine erste Antriebsvorrichtung 6, einen zweiten Blechhalter 11, eine zweite Antriebsvorrichtung 12 und einen ersten Stempel 4 auf. In der geöffneten Formvorrichtung 1 ist bereits in der Pressebene 8 eine Metallverbundfolie 7 eingelegt. Die erste Antriebsvorrichtung 6 ist dazu ausgebildet den ersten Blechhalter 2 gegen die erste Matrize 3 zu verfahren und dabei die Metallverbundfolie 7 zwischen diesen einzuklemmen. Der Bereich, in dem die Klemmung erfolgt, bildet den ersten Fixierbereich 13. An den ersten Fixierbereich 13 schließt sich in der Pressebene 8 unmittelbar ein zweiter Fixierbereich 14 an. Der zweite Fixierbereich ist dabei der Bereich, in dem die Metallverbundfolie 7 durch Klemmung zwischen der zweiten Matrize 10 und dem zweiten Blechhalter 11 gehalten wird. Dazu ist die zweite Antriebsvorrichtung 12 so ausgebildet, dass sie den zweiten Blechhalter 11 mit der zweiten Matrize 10 zusammenfahren und dabei die Metallverbundfolie 7 fixieren kann. Die Formvorrichtung 1 ist so aufgebaut, dass die zweite Matrize 10 und der zweite Blechhalter 11 innerhalb der ersten Matrize 3 bzw. innerhalb des ersten Blechhalters 2 angeordnet sind. Der erste Stempel 4 seinerseits ist wiederum innerhalb des zweiten Blechhalters 11 angeordnet. Unterhalb des Stempels 4 befindet sich ein Umformbereich 15, in dem die Metallverbundfolie 7 durch den Stempel 4 umgeformt wird.

Die Fig. 5 zeigte die Formvorrichtung 1 nach Figur 4 in einem Zustand, in dem der erste Blechhalters 2 und die erste Matrize 3 zusammengefahren sind und dabei die Metallverbundfolie 7 im ersten Fixierbereich 13 fixieren.

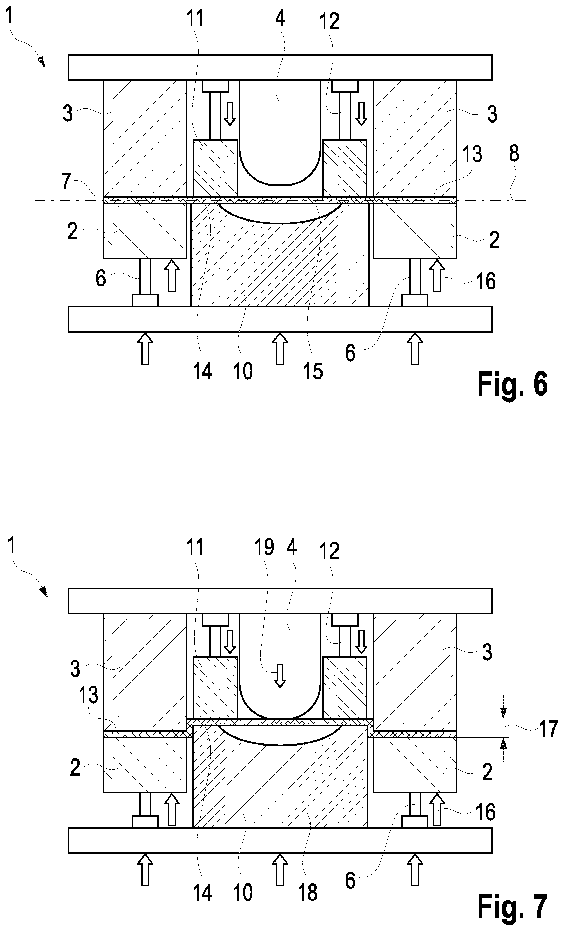

In Fig. 6 ist die Situation dargestellt, bei der die Metallverbundfolie 7 nun zusätzlich auch im zweiten Fixierbereich 14 fixiert ist. Dies geschieht, indem die Antriebsvorrichtung 12 den zweiten Blechhalter 11 mit der zweiten Matrize 10 zusammenfährt. Hierbei stellt die Bewegung des ersten Blechhalters 2 in Richtung der ersten Matrize 3 eine erste Richtung 16 dar.

Die Fig. 7 zeigt nun den Beginn der Umformung der Metallverbundfolie. Bei dem dargestellten Zustand wird die Metallverbundfolie 7 jeweils bereits im ersten Fixierbereich 13 und im zweiten Fixierbereich 14 fixiert aber noch nicht im Umformbereich 15 vom Stempel 4 verformt. Um sicherzustellen, dass die Klemmung im zweiten Fixierbereich 14 sicher erfolgt, bevor der erste Stempel 4 die Metallverbundfolie 7 berührt, weist der zweite Blechhalter 11 einen geometrischen Vorlauf gegenüber dem ersten Stempel 4 auf. Dieser geometrische Vorlauf ist mit dem Abstandsmaß 17 schematisch dargestellt. Beim Zusammenfahren kontaktiert der zweite Blechhalter dann aufgrund des Vorlaufs die Metallverbundfolie 7 vor dem ersten Stempel 4. Gut erkennbar ist hierbei, wie die zweite Matrize 10 in der Bildebene nach oben in die erste Matrize 3 hineinfährt und bei dieser Bewegung wie ein zweiter Stempel 18 wirkt. Aufgrund der so erzeugten Relativbewegung wird der erste Stempel 4 in Richtung einer zweiten Richtung 19 bewegt und gelangt in Kontakt mit der Metallverbundfolie 7.

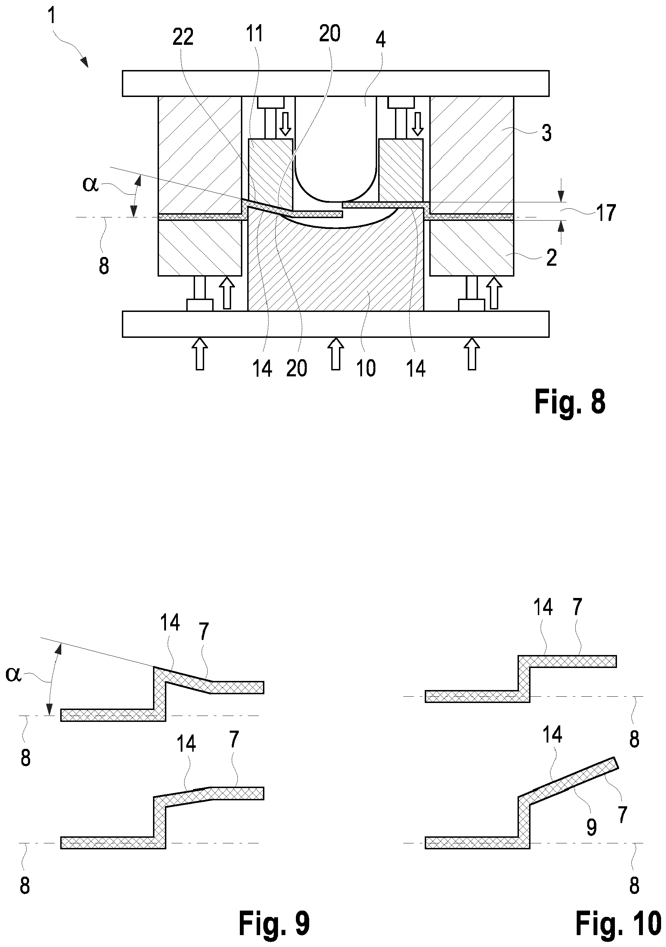

In Fig. 8 sind zwei mögliche Ausführungsformen der Erfindung dargestellt. In der rechten Hälfte ist die Ausführungsform dargestellt, bei der der zweite Fixierbereich 14 parallel zur Pressebene 8 ausgebildet ist. Dies entspricht der bereits im Zusammenhang mit Figur 7 beschriebenen Ausführungsform.

In der linken Hälfte ist hingegen eine Ausführungsform dargestellt, bei der die Metallverbundfolie 7 im zweiten Fixierbereich 14 unter einem Winkel (a) bezogen auf die Pressebene 8 ausgebildet ist. Dazu sind eine Stirnfläche 20 des zweiten Blechhalters 11 und eine Stirnfläche 20 der zweiten Matrize 10 entsprechend unter dem Winkel (α) gegenüber der Pressebene 8 geneigt angeordnet. Durch diese Ausgestaltung kann einer möglichen Rückfederung der Metallverbundfolie 7 zusätzlich entgegengewirkt werden.

Die Fig. 9 zeigt diesen Effekt nochmals anhand einer Gegenüberstellung der Metallverbundfolie 7 im umgeformten Zustand, wie im oberen Bereich der Figur dargestellt und im rückgefederten Zustand, wie im unteren Bereich der Figur zu sehen ist. Mithilfe der geneigten Anordnung des zweiten Fixierbereichs 14, kann somit einer unerwünschten Rückfederung wirksam entgegengetreten werden.

In Fig. 10 ist eine Situation dargestellt, die bei sehr stark rückfedernden Metallverbundfolien 7 auftreten kann, wenn der zweite Fixierbereich 14, wie im oberen Bereich dargestellt, nicht unter einem Winkel (α) zur Pressebene 8 angeordnet ist. In diesem Fall kann es nach der Entnahme aus der Formvorrichtung 1 zu einer deutlichen und unerwünschten Rückfederung 9 kommen.

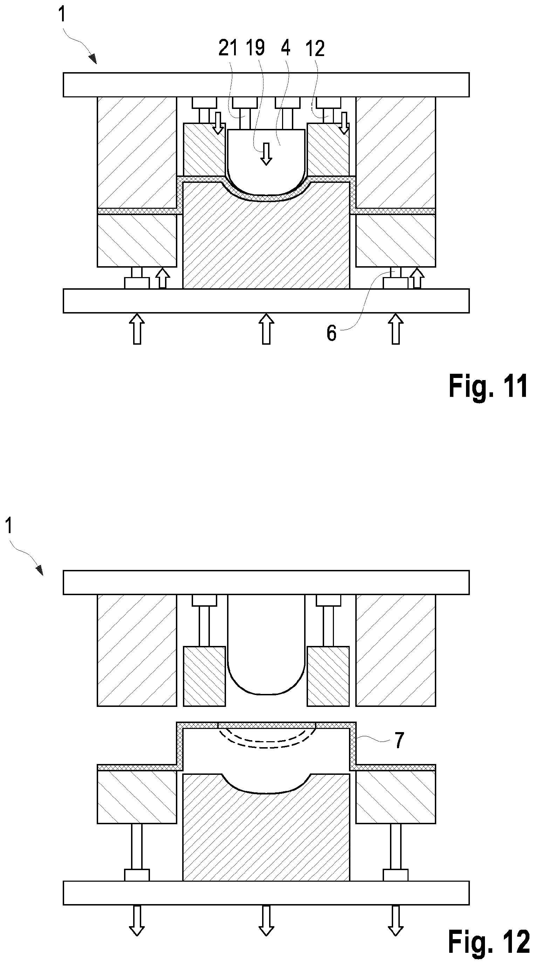

In Fig. 11 ist eine weitere mögliche Ausführungsform der vorliegenden Erfindung dargestellt, bei der neben der ersten Antriebsvorrichtung 6 und der zweiten Antriebsvorrichtung 12 noch eine dritte Antriebsvorrichtung 21 vorgesehen ist, um den ersten Stempel 4 in die zweite Richtung 19 zu bewegen. Im Übrigen ist der Aufbau der in Fig. 11 dargestellten Formvorrichtung 1 im Wesentlichen identisch mit den zuvor im Zusammenhang mit den Fig. 4 bis 8 beschriebenen Formvorrichtungen 1.

In Fig. 12 ist schließlich eine Formvorrichtung 1 im geöffneten Zustand dargestellt, wobei die Metallverbundfolie 7 im rückgefederten Zustand mit einer Volllinie dargestellt ist. Die mit einer gestrichelten Linie dargestellte Kontur gibt hierbei die vorgeformte Kontur an, wie sie bei geschlossener Formvorrichtung 1 erzeugt worden ist.

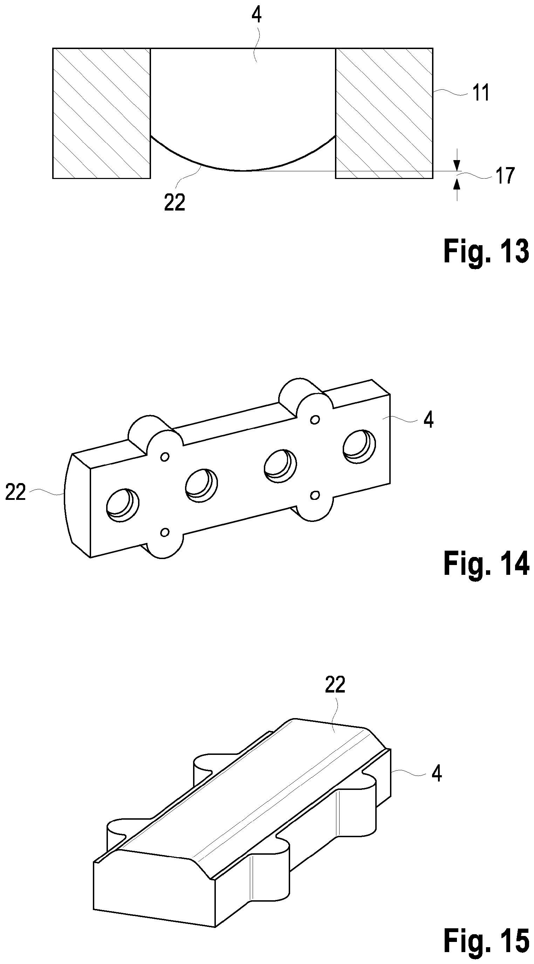

Die Fig. 13 zeigt einen zweiten Blechhalter 11 mit einem darin angeordneten ersten Stempel 4. Im Gegensatz zum Stand der Technik verwendet die vorliegende Erfindung keinen einteiligen Gegenstempel, sondern eine zweiteilige Ausführungsform mit einer Kombination von einem zweiten Blechhalter 11 und einem ersten Stempel 4. Auch hierbei weist der zweite Blechhalter 11 wiederum einen geometrischen Vorlauf gegenüber dem ersten Stempel 4 auf, der als Abstandsmaß 17 dargestellt ist. Dieses Abstandsmaß 17 kann beispielsweise 0,5 mm, 1 mm oder auch darüber betragen. Der Stempel 4 weist zur Metallverbundfolie 7 hin eine konkav gewölbte Stempelfläche 22 auf. Damit ist es möglich die Metallverbundfolie 7 im Umformbereich 15 in die in dieser Figur nicht dargestellte konkav geformte zweite Matrize 10 umzuformen.

Die Fig. 14 zeigt den ersten Stempel 4 nochmals in einer Schrägansicht, wobei auf der linken Seite wiederum die konvex geformte Stempelfläche 22 gut erkennbar ist.

Die Fig. 15 zeigt eine mögliche alternative Ausführungsform eines ersten Stempels 4 mit einer abgeflachten Stempelfläche 22, die beispielsweise dann zum Einsatz kommen kann, wenn eine Metallverbundfolie 7 mit einer geringeren Rückfederung 9 verwendet wird.

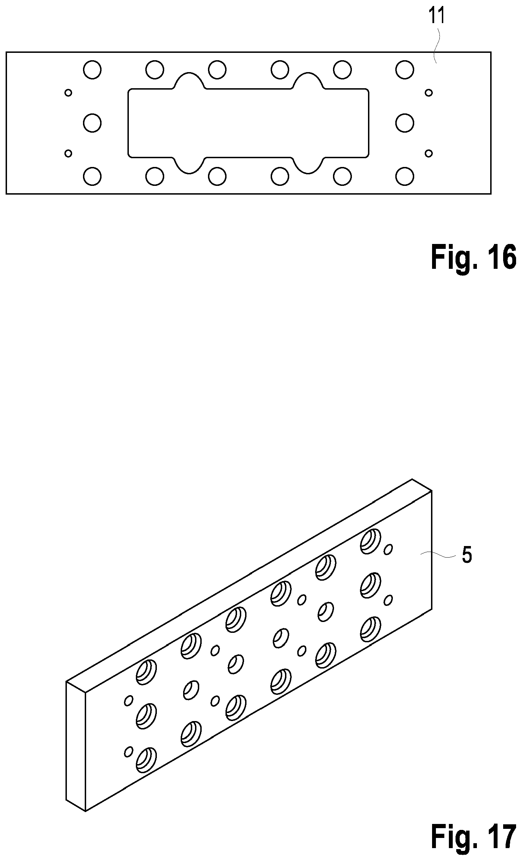

In Fig. 16 ist ein zweiter Blechhalter 11 nochmals in einer Draufsicht dargestellt. In den dort dargestellten zweiten Blechhalter 11 können je nach Bedarf die ersten Stempel 4 gemäß den Figuren 14 oder 15 eingesetzt werden.

Die Fig. 17 zeigt einen Gegenstempel 5, wie er im Stand der Technik benutzt wird. Dieser Gegenstempel 5 zeichnet sich dadurch aus, dass er einteilig ausgebildet ist und keinerlei Umformung in die zweite Richtung ausführen kann. Insbesondere können mit diesem einfachen Gegenstempel 5 keine unterschiedlichen Umformungen in verschiedenen Bereichen durchgeführt werden, wie dies mit dem zweiten Blechhalter 11 und dem ersten Stempel 4 gemäß der vorliegenden Erfindung, beispielsweise in dem zweiten Fixierbereich 14 und dem Umformbereich 15, möglich ist.

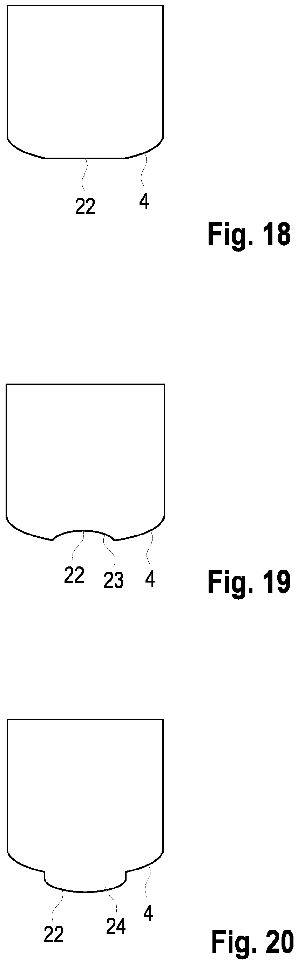

In Fig. 18 ist ein erster Stempel 4 dargestellt, dessen Stempelfläche 22 im unteren Bereich eine Abflachung aufweist.

In Fig. 19 ist eine andere Ausführungsform eines ersten Stempels 4 dargestellt, dessen Stempelfläche 22 im unteren Bereich einen konkaven Abschnitt 23 aufweist.

Ferner ist in Fig. 20 ein erster Stempel 4 dargestellt, dessen Stempelfläche 22 bereits konvex ausgebildet ist und an der Unterseite einen zusätzlichen Vorsprung 24 aufweist.

Vorzugsweise sind bei allen Ausführungsformen der Stempelfläche 22 der Stempel 4 die zugehörigen und gegenüberliegenden Anlageflächen der zweiten Matrize 10 komplementär zu den jeweiligen Stempelflächen 22 ausgeführt, um bestmögliche Umformergebnisse zu erreichen.

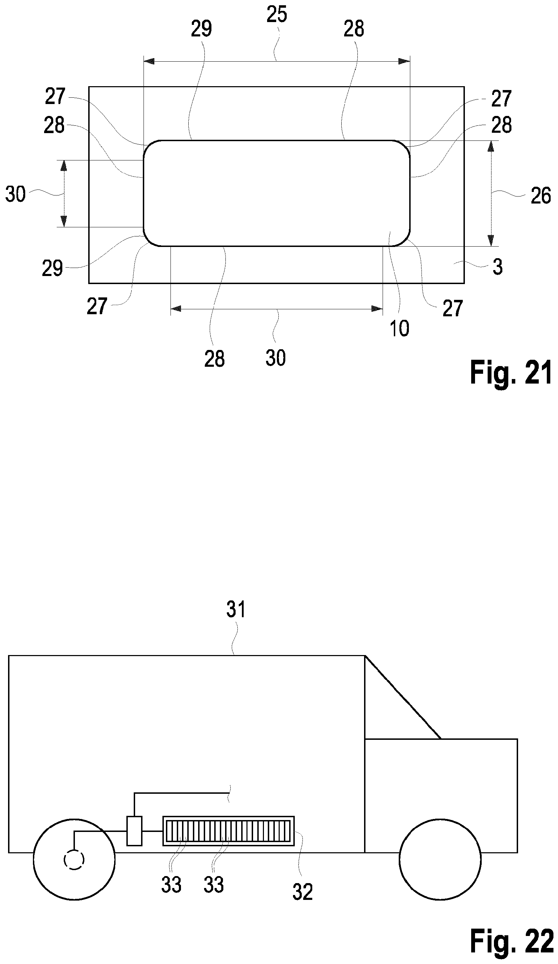

Ferner ist in Fig. 21 eine Draufsicht auf eine erste Matrize 3 mit einer darin eingesetzten zweiten Matrize 10 dargestellt. Die zweite Matrize 10 weist dabei eine Länge 25 und eine Breite 26 auf. Bei der dargestellten Ausführungsform weist die zweite Matrize 10 vier Ecken 27 auf, sowie vier die Ecken miteinander verbindende Längsseiten 28. Zudem befindet sich ein Spalt 29 umlaufend um die zweite Matrize 10 zwischen der zweiten Matrize 10 und der ersten Matrize 3. Der umlaufende Spalt 29 weist dabei eine unterschiedliche Spaltbreite auf. Die Spaltbreite ist im Bereich der Ecken 27 größer als die Materialstärke der umzuformenden Metallverbundfolie 7.

Hierbei hat es sich bewährt, die Spaltbreite bis zu 50 %, vorzugsweise bis zu 120 % und insbesondere bis zu 110% größer zu wählen als die Materialstärke der Metallverbundfolie 7. Durch die deutliche Vergrößerung der Spaltbreite im Bereich der Ecken 27 über die Materialstärke der Metallverbundfolie 7 hinaus, wird in diesen stark verformten Bereichen das Einfließen der Metallverbundfolie 7 während der Umformung erleichtert und eine Beschädigung der Metallverbundfolie 7 durch übergroße Streckungen vermieden.

Im Gegensatz dazu wird die Spaltbreite des Spalts 29 im Bereich der Längsseiten 28 bevorzugt zwischen 100% und 120% und insbesondere zwischen 100% und 110% der Materialstärke der umzuformenden Metallverbundfolie 7 gewählt. Hierbei kann die Spaltbreite des Spalts 29 an den Längsseiten 28 kleiner gewählt werden als die dessen Spaltbreite in den Ecken 27. Durch die Reduzierung der Spaltbreite im Bereich der Längsseiten 28 können diese Bereiche einer stärkeren Streckung der Metallverbundfolie 7 unterzogen werden, wodurch der Grad der Umformung erhöht wird. Eine Längsseitenlänge 30 gibt dazu die Bereiche an, in denen die Spaltbreite reduziert ist. Hierzu kann vorgesehen werden, dass die Längsseitenlänge 30 wenigstens 60 %, vorzugsweise wenigstens 80 % und insbesondere wenigstens 90 % der Länge 25 bzw. Breite 26 betragen. Die Länge 25 bzw. die Breite 26 können auch als Seitenlänge bezeichnet werden. Vorzugsweise sind die Bereiche mit geringerer Spaltbreite möglichst im gleichen Abstand zu den Ecken 27 angeordnet.

Die Fig. 22 zeigt schließlich eine Kraftfahrzeug 31 mit einer Batterie 32, die eine Mehrzahl von Batteriezellen 33 umfasst. Die in der Batterie 32 gespeicherte Energie wird zum Antrieb des Kraftfahrzeugs 31 genutzt.

Insgesamt ist somit festzustellen, dass durch die zweiteilige Ausführung von ersten Stempel 4 und zweitem Blechhalter 11 deutliche Vorteile erreicht werden können. So wird durch den zweiten Blechhalter 11 die Metallverbundfolie 7 sicher fixiert und es wird verhindert, das während des Uniformvorgangs ein Materialfluss durch den ersten Stempel 4 hervorgerufen wird. Dies hat den Vorteil, dass das vom ersten Stempel 4 gedehnte Material durch Dehnung und Reduzierung der Werkstoffdicke erzeugt wird und von daher die zusätzliche plastische Dehnung weniger Rückfederung erzeugt. Weiterhin können mittels der vorliegenden Erfindung Metallverbundfolien 7 mit besonders dünnen Aluminiumschichten zuverlässig und präzise verarbeitet werden. Dies kann zudem bei üblichen Umgebungstemperaturen von beispielsweise 20 °C bis 30°C geschehen und eine energieintensive Zuheizung kann entfallen oder zumindest auf ein Minimum reduziert werden.

Schließlich ermöglicht die vorliegende Erfindung die Umformung der Metallverbundfolie 7 besser zu kontrollieren, indem unterschiedliche Spaltbreiten an den Längsseiten 28 und den Eckbereichen 27 zum Einsatz kommen. Auf diese Weise können auch auf den Längsseiten besonders gute Umformergebnisse erzielt werden, während gleichzeitig die bisher hochbelasteten und sehr kritischen Eckbereiche 27 einen verbesserten Materialfluss aufweisen und somit weniger anfällig für Beschädigungen sind.

### Bezugszeichenliste

- 1: Formvorrichtung
- 2: erster Blechhalter
- 3: erste Matrize
- 4: erster Stempel
- 5: Gegenstempel
- 6: erste Antriebsvorrichtung
- 7: Metallverbundfolie
- 8: Pressebene
- 9: Rückfederung
- 10: zweite Matrize
- 11: zweiter Blechhalter
- 12: zweite Antriebsvorrichtung
- 13: erster Fixierbereich
- 14: zweiter Fixierbereich
- 15: Umformbereich
- 16: erste Richtung
- 17: Abstandsmaß
- 18: zweiter Stempel
- 19: zweite Richtung
- 20: Stirnfläche
- 21: dritte Antriebsvorrichtung
- 22: Stempelfläche
- 23: Konkave Abschnitt
- 24: Vorsprung
- 25: Länge
- 26: Breite
- 27: Ecke
- 28: Längsseite
- 29: Spalt
- 30: Längsseitenlänge
- 31: Kraftfahrzeug
- 32: Batterie
- 33: Batteriezelle

## Patentansprüche

1. Verfahren zur Umformung einer Metallverbundfolie (7) für Batteriezellen (33), das wenigstens die folgenden Schritte aufweist:
a) Einlegen der Metallverbundfolie (7) in eine Formvorrichtung (1) mit mehreren Blechhaltern (2,11) und mehreren Matrizen (3,10), sowie einen Stempel (4);
b) Fixieren eines ersten Fixierbereichs (13) der Metallverbundfolie (7) durch Schließen eines ersten Blechhalters (3) und einer ersten Matrize (3);
c) Fixieren eines zweiten Fixierbereichs (14) der Metallverbundfolie (7) durch Schließen eines zweiten Blechhalters (11) und einer zweiten Matrize (10);
d) zumindest teilweises Verformen des zweiten Fixierbereichs (14) in eine erste Richtung (16) durch Verfahren des zweiten Blechhalters (11) und der zweiten Matrize(10);
e) zumindest teilweises Verformen eines Umformbereichs (15) in eine zweite Richtung(19) durch Verfahren des Stempels (4).

2. Verfahren nach dem vorhergehenden Anspruch, wobei Schritt c) zeitlich nach Schritt d) durchgeführt wird.

3. Verfahren nach einem der vorhergehenden Ansprüche, wobei die Metallverbundfolie (7) im zweiten Fixierbereich (14) an einer Stirnfläche (20) des zweiten Blechhalters (11) zumindest teilweise unter einem Winkel (α) zu einer Pressebene (8) umgeformt wird.

4. Verfahren nach einem der vorhergehenden Ansprüche, wobei mit dem zweiten Blechhalter (11) im zweiten Fixierbereich (14) eine Haltekraft erzeugt wird, die größer ist als eine mit dem Stempel (4) im Umformbereich erzeugte Zugkraft.

5. Verfahren nach einem der vorhergehenden Ansprüche, wobei als Metallverbundfolie (7) eine Aluminium-Verbundfolie eingesetzt wird.

6. Verfahren nach einem der vorhergehenden Ansprüche, wobei eine Wandstärke der Metallverbundfolie (7) im Bereich von 100 µm bis 180 µm gewählt wird.

7. Batteriezelle (33) mit einer Metallverbundfolie (7) hergestellt nach einem der vorhergehenden Ansprüche.

8. Kraftfahrzeug (31) mit wenigstens einer Batteriezelle (33) nach dem vorhergehenden Anspruch 7.

9. Formvorrichtung (1) zur Umformung einer Metallverbundfolie (7) für Batteriezellen (33), zumindest aufweisend einen ersten Blechhalter (2), eine erste Antriebsvorrichtung (6) zum Zusammenfahren des ersten Blechhalters (2) mit einer ersten Matrize (3), einen zweiten Blechhalter (11), eine zweiten Matrize (10) und einen ersten Stempel (4), **dadurch gekennzeichnet, dass** der zweite Blechhalter (11), die zweite Matrize (10) und der erste Stempel (4) so innerhalb des ersten Blechhalters (2) und innerhalb der ersten Matrize (3) angeordnet sind, dass die zweite Matrize (10) als zweiter in die erste Matrize verfahrbarer Stempel (18) ausgebildet ist und der erste Stempel (4) so innerhalb des zweiten Blechhalters (11) angeordnet ist, dass dieser in die zweite Matrize (10) verfahrbar ist.

10. Formvorrichtung (1) nach dem vorhergehenden Anspruch, **dadurch gekennzeichnet, dass** diese eine zweite Antriebsvorrichtung (12) zum Zusammenfahren des zweiten Blechhalters (11) mit der zweiten Matrize (10) und eine dritte Antriebsvorrichtung (21) zum Zusammenfahren des ersten Stempels (4) mit der zweiten Matrize (10) aufweist und die zweite Antriebsvorrichtung (12) eine Haltekraft auf die Metallverbundfolie (7) ausüben kann, die größer ist als eine Zugkraft, welche die dritte Antriebsvorrichtung (21) auf die Metallverbundfolie (7) ausüben kann.

11. Formvorrichtung (1) nach einem der vorhergehenden Ansprüche 9 oder 10, **dadurch gekennzeichnet, dass** der erste Stempel (4) die Metallverbundfolie (7) in einer Gegenrichtung zur ersten Umformrichtung (16) des zweiten Stempels (18) umformt.

12. Formvorrichtung (1) nach einem der vorhergehenden Ansprüche 9 bis 11, **dadurch gekennzeichnet, dass** der erste Stempel (4) eine konvexe Stempelfläche (22) aufweist.

13. Formvorrichtung (1) nach einem der vorhergehenden Ansprüche 9 bis 12, **dadurch gekennzeichnet, dass** ein Vorlauf des zweiten Blechhalters (11) gegenüber dem ersten Stempel (4) von wenigstens 0,5 mm beträgt.

14. Formvorrichtung (1) nach einem der vorhergehenden Ansprüche 9 bis 13, **dadurch gekennzeichnet, dass** parallel zur Bewegungsrichtung der Relativbewegung zwischen dem zweiten Blechhalter (11) und der ersten Matrize (3) ein Spalt (29) zwischen der zweiten Matrize (10) und der ersten Matrize (3) vorgesehen ist und der Spalt (29) mit einer variablen Spaltbreite ausgeführt ist.

15. Formvorrichtung (1) nach einem der vorhergehenden Ansprüche 9 bis 14, **dadurch gekennzeichnet, dass** wenigstens 60% einer Seitenlänge (25,26) der zweiten Matrize (10) eine Spaltbreite zwischen 100% und 120% einer Materialstärke der Metallverbundfolie (7) aufweist.

16. Formvorrichtung (1) nach einem der vorhergehenden Ansprüche 9 bis 15, **dadurch gekennzeichnet, dass** eine Stempelfläche (22) des zweiten Blechhalters (11) wenigstens teilweise unter einem Winkel (α) zu einer Pressebene (8) ausgeführt ist.

17. Formvorrichtung (1) nach einem der vorhergehenden Ansprüche 9 bis 16, **dadurch gekennzeichnet, dass** die Metallverbundfolie (7) eine Schichtdicke des Aluminiums von weniger als 60 µm aufweist.
